# EUROPEAN PATENT SPECIFICATION

(11) **EP 2 328 984 B1**
(45) Date of publication and mention of the grant of the patent: **01.08.2018**
(21) Application number: 09791691.0
(22) Date of filing: 20.08.2009
(51) Int. Cl.: C09D 167/06, C09D 167/08

(54) **BIOMASS DERIVED RADIATION CURABLE LIQUID COATINGS**
DURCH STRAHLUNG HÄRTBARES FLÜSSIGES BESCHICHTUNGSMITTEL AUS BIOMASSE
REVÊTEMENTS LIQUIDES ISSUS DE LA BIOMASSE POLYMÉRISABLES PAR RAYONNEMENT

(30) Priority: 02.09.2008 US 202844
(43) Date of publication of application: 08.06.2011
(73) Proprietor: PPG Industries Ohio, Inc., Cleveland, OH 44111 (US)
(72) Inventor: ZHOU, Hongying, Allison Park PA 15101 (US); FUHRY, Mary Ann, M ., Butler PA 16001 (US); CHENG, Shan, Sewickley PA 15143 (US); FENN, David, R., Allison Park PA 15101 (US); KINGERA, Anthony, P., Pittsburgh PA 15235 (US); MONTANARI, Vittorio, Albany , Georgia 31707 (US); AMBROSE, Ronald, R., Loganville GA 30052 (US); McCOLLUM, Gregory J., Gibsonia PA 15044 (US)
(74) Representative: f & e patent
(86) International application number: PCT/US2009/054377
(87) International publication number: WO 2010/027673

(56) References cited:
- EP-A- 0 293 905
- EP-A2- 0 293 905
- EP-A2- 0 293 905
- WO-A-2004/096882
- WO-A-2009/105625
- WO-A1-2004/096882
- WO-A1-2004/096882
- WO-A2-2006/138557
- WO-A2-2006/138557
- WO-A2-2009/105625
- WO-A2-2009/105625
- US-A- 6 107 433
- US-A- 6 107 433
- US-A- 6 107 433
- US-A1- 2003 232 955
- US-A1- 2003 232 955
- US-A1- 2005 196 618
- US-A1- 2005 196 618
- US-B1- 6 433 121
- US-B1- 6 433 121
- US-B1- 6 686 435

## Description

### FIELD OF THE INVENTION

The present invention is directed to radiation curable liquid coatings comprising a reaction product of a polyol and a polycarboxylic acid/anhydride, wherein at least some of the polyol and/or the polycarboxylic acid/anhydride are biomass derived.

### BACKGROUND OF THE INVENTION

The price of raw materials used in many manufacturing processes continues to rise, particularly those whose price rises or falls with the price of oil. Because of this, and because of the predicted depletion of oil reserves, raw materials derived from renewable resources or alternative resources may be desired. An increase in demand for environmentally friendly products, together with the uncertainty of the variable and volatile petrochemical market, has promoted the development of raw materials from renewable and/or inexpensive sources. This increase in demand has made biodegradable coating compositions of interest in numerous industries. This is particularly relevant in the consumer electronics industry, where an increasing number of cellular telephones, PDAs, MP3s and the like are finding their way to landfills. Biodegradable coatings, particularly with biodegradable housings, are desirable. In addition, UV curable coatings are often desired in various industries, particularly those in which it is not desired to subject the substrate to a thermal cure. Examples include again the consumer electronics industry, certain segments of the automobile industry, the plastics industry, and the wood industry as illustrated in WO2006138557.

### SUMMARY OF THE INVENTION

The present invention is directed to a radiation curable liquid coating comprising: the reaction product of a) a polyol; and b) a polycarboxylic acid/anhydride, wherein at least some of a) and/or b) are biomass derived, wherein the polyol is not a condensation reaction product of an acid functional compound and a hydroxy functional compound and comprises 1,3-propanediol and glycerol; and wherein the reaction product comprises ethylenic unsaturation that is derived from a) and/or b), but if derived only from b, b has more than four carbons.

### DETAILED DESCRIPTION OF THE INVENTION

The present invention is directed to a radiation curable liquid coating comprising the reaction product of a polyol and a polycarboxylic acid/anhydride, wherein at least some of the polyol and/or polycarboxylic acid/anhydride is biomass derived. This reaction product is sometimes referred to herein as the "polyol/polycarboxylic reaction product", the "reaction product" and like terms; the term "polyol/polycarboxylic reaction product" is also used herein broadly to refer to the product resulting from reaction of the polyol/polycarboxylic reaction product with one or more additional components. The polyol/polycarboxylic reaction product itself contains ethylenic unsaturation, which will be known by those skilled in the art as a radiation curable moiety, thereby rendering the coating radiation curable. As used herein, the term "biomass derived" will be understood to be derived from a living or recently living organism for example, plants (including trees) or animals and not from a petroleum-based source.

In certain embodiments, at least some of the polyol is biomass derived. These polyols can be derived from natural oils such as castor oil, peanut oil, soy bean oil or canola oil.

According to the present invention the polyol comprises propanediol and glycerol; the propanediol can be 1,3-propanediol. Any suitable ratio of 1,3-propanediol to glycerol can be used such as 9:1 to 1:9, 4:1 to 1:4, 1.5:1 to 1:1.5, 1:1 and the like.

The polyol used according to the present invention is not the condensation reaction product of an acid functional compound and a hydroxyl functional compound. An acid functional compound as used in this context refers to any compound having one or more acid functional groups, and optionally one or more additional functional groups. A hydroxyl functional compound as used in this context refers to any compound having one or more hydroxyl functional groups, and optionally one or more additional functional groups. If an acid functional compound and hydroxyl functional compound are used in the formation of the reaction products of the present invention, they do not react via condensation polymerization, but rather react by ring opening polymerization.

Any suitable polycarboxylic acid/anhydride can be used according to the present invention. It will be understood by those skilled in the art that a polycarboxylic acid is one that has two or more acid functional groups, or residues thereof, such as anhydride groups. Suitable polycarboxylic acid/anhydrides include maleic acid/anhydride, fumaric acid/anhydride, and itaconic acid/anhydride. In certain embodiments, the polycarboxylic acid/anhydride is a biomass derived polycarboxylic acid/anhydride. A suitable example includes itaconic acid/anhydride, which is commercially available from Cargill, Aldrich, Acros and the like. Thus, the ethylenic unsaturation in the reaction product can be derived from the polycarboxylic acid/anhydride. If the ethylenic unsaturation is derived only from the polycarboxylic acid/anhydride, that acid/anhydride has more than four carbons. An example of an acid/anhydride with more than four carbons is itaconic acid/anhydride.

In certain embodiments, the polyol/polycarboxylic reaction product is further reacted with a hydroxyl-carboxylic acid. Any suitable hydroxyl-carboxylic acid can be used according to the present invention. It will be understood by those skilled in the art that a hydroxyl-carboxylic acid is one that has one or more acid functional groups, and one or more hydroxyl groups and is sometimes called a hydroxy acid. A suitable example includes 12-hydroxystearic acid, which is commercially available from Arizona Chemical Co.

It will be appreciated that the polyol and/or polycarboxylic acid/anhydride residue or moiety that is in the present reaction product has ethylenic unsaturation that renders a coating comprising the reaction product radiation curable. In certain embodiments, the polyol/polycarboxylic reaction product is further reacted with another compound having a radiation curable moiety. This reaction can take place by any means standard in the art, such as through esterification or a hydroxy/NCO reaction. Suitable compounds having a radiation curable moiety include (meth)acrylates. As used herein, and as is conventional in the art, "(meth)acrylate" refers to both acrylate and the corresponding methacrylate. Examples of suitable compounds that can be further reacted with the polyol/polycarboxylic reaction product include, but are not limited to, acryloyl isocyanates including isophorone diisocyanate-hydroxyethyl acrylate adduct, and isocyanatoethyl(meth)acrylate ("AOI").

In certain embodiments, any of the polyol/polycarboxylic reaction products described herein may contain 50 weight percent or greater biomass derived material, such as 80 weight percent or greater or 90 weight percent or greater, with weight percent based on total solid weight. It will be appreciated that the biomass derived material can be a result of either biomass derived polyol, biomass derived polycarboxylic acid/anhydride, or both. When using a hydroxyl-carboxylic acid, that may also be biomass derived.

As noted above, the polyol used according to the present invention does not comprise the condensation product of an acid functional component and a hydroxy functional component. Thus, the only polycarboxylic acid/anhydride residue in the reaction product of components a) and b) as described herein derives from component b, the polycarboxylic acid/anhydride. The reaction product of a) and b) can, however, be further reacted with other polycarboxylic acid/anhydrides. Such an embodiment is therefore explicitly within the scope of the present invention.

As noted above, the use of the present polyol/polycarboxylic reaction product in a coating renders the coating radiation curable. A radiation curable coating will be understood as one that is cured by exposure to radiation, such as actinic radiation, examples of which include UV and electron beam radiation. When the polyol/polycarboxylic reaction product, which is itself radiation curable, is further reacted with a compound having a radiation curable moiety, the resulting polyol/polycarboxylic reaction product may have increased cure rate of the material, and may have increased crosslink density of the cured film. The increased crosslink density may contribute to improved film properties such as hardness and/or abrasion resistance.

It will be appreciated that when the present polyol/polycarboxylic reaction product is used in a coating according to the present invention, it can form all or part of the film-forming resin of the coating. In certain embodiments, one or more additional film-forming resins are also used in the coating. For example, the coating compositions can comprise any of a variety of thermoplastic and/or thermosetting compositions known in the art. The coating compositions may be water based or solvent based liquid compositions.

Thermosetting or curable coating compositions typically comprise film forming polymers or resins having functional groups that are reactive with either themselves or a crosslinking agent. The additional film-forming resin can be selected from, for example, acrylic polymers, polyester polymers, polyurethane polymers, polyamide polymers, polyether polymers, polysiloxane polymers, copolymers thereof, and mixtures thereof. Generally these polymers can be any polymers of these types made by any method known to those skilled in the art. Such polymers may be solvent borne or water dispersible, emulsifiable, or of limited water solubility. The functional groups on the film-forming resin may be selected from any of a variety of reactive functional groups including, for example, carboxylic acid groups, amine groups, epoxide groups, hydroxyl groups, thiol groups, carbamate groups, amide groups, urea groups, isocyanate groups (including blocked isocyanate groups) mercaptan groups, and combinations thereof. Appropriate mixtures of film-forming resins may also be used in the preparation of the present coating compositions.

If an additional thermosetting film former is used in the coating composition, it may be self-crosslinking, that is, it may have functional groups that are reactive with themselves, or a crosslinking agent may be added. The crosslinking agent can comprise polyisocyanates, aminoplasts, polyepoxides, beta hydroxyalkylamides, polyacids, and hydrides, organometallic acid-functional materials, polyamines, polyamides, and mixtures of any of these.

When a crosslinker is used, the coatings of the present invention can comprise 5 to 60 weight %, such as 10 to 50, or 20 to 40 weight %, based on total solids weight, of crosslinker.

It will be appreciated that if the coatings of the present invention further comprise an additional film-forming resin that is thermoplastic or thermosetting, the coating will be "dual cure". That is, the coating will cure via the radiation curable moieties and also will cure via thermoplastic or thermosetting cure. Alternatively, the polyol/polycarboxylic reaction products described herein can be further reacted with components having functionality that will render the reaction product itself dual cure. In certain embodiments, the reaction product can comprise a radiation curable moiety and a hydroxy group, for example, which can be further reacted with an appropriate crosslinker. As used herein, the term "thermoplastic and/or thermosetting moiety" and like terms refers to an additional film-forming resin that is thermoplastic or thermosetting, and/or functionality on the reaction product itself that renders the reaction product capable of thermoplastic and/or thermosetting cure.

If desired, the coating compositions can comprise other optional materials well known in the art of formulating coatings in any of the components, such as colorants, plasticizers, anti-oxidants, hindered amine light stabilizers, UV light absorbers and stabilizers, surfactants, flow control agents, thixotropic agents, fillers, organic cosolvents, abrasion resistant particles, reactive diluents, catalysts, grind vehicles, and other customary auxiliaries.

An "abrasion resistant particle" is one that, when used in a coating, will impart some level of abrasion resistance to the coating as compared with the same coating lacking the particles. Suitable abrasion resistant particles include organic and/or inorganic particles. Examples of suitable organic particles include but are not limited to diamond particles, such as diamond dust particles, and particles formed from carbide materials; examples of carbide particles include but are not limited to titanium carbide, silicon carbide and boron carbide. Examples of suitable inorganic particles, include but are not limited to silica; alumina; alumina silicate; silica alumina; alkali aluminosilicate; borosilicate glass; nitrides including boron nitride and silicon nitride; oxides including titanium dioxide and zinc oxide; quartz; nepheline syenite; zircon such as in the form of zirconium oxide; buddeluyite; and eudialyte. Particles of any size can be used, as can mixtures of different particles and/or different sized particles. For example, the particles can be microparticles, having an average particle size of 0.1 to 50, 0.1 to 20, 1 to 12, 1 to 10, or 3 to 6 microns, or any combination within any of these ranges. The particles can be nanoparticles, having an average particle size of less than 0.1 micron, such as 0.8 to 500, 10 to 100, or 100 to 500 nanometers, or any combination within these ranges. Silica nanoparticles are particularly suitable. Such nanoparticles may be introduced as a dispersion, such as a dispersion in a radiation curable monomer or a dispersion in an organic solvent.

As used herein, the term "colorant" means any substance that imparts color and/or other opacity and/or other visual effect to the composition. The colorant can be added to the coating in any suitable form, such as discrete particles, dispersions, solutions and/or flakes. A single colorant or a mixture of two or more colorants can be used in the coatings of the present invention.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coatings by grinding or simple mixing. Colorants can be incorporated by grinding into the coating by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black, carbon fiber, graphite, other conductive pigments and/or fillers and mixtures thereof. The terms "pigment" and "colored filler" can be used interchangeably.

Example dyes include, but are not limited to, those that are solvent and/or aqueous based such as acid dyes, azoic dyes, basic dyes, direct dyes, disperse dyes, reactive dyes, solvent dyes, sulfur dyes, mordant dyes, for example, bismuth vanadate, anthraquinone, perylene aluminum, quinacridone, thiazole, thiazine, azo, indigoid, nitro, nitroso, oxazine, phthalocyanine, quinoline, stilbene, and triphenyl methane,

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemicals, Inc.

As noted above, the colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having a particle size of less than 150 nm, such as less than 70 nm, or less than 30 nm. Nanoparticles can be produced by milling stock organic or inorganic pigments with grinding media having a particle size of less than 0.5 mm. Example nanoparticle dispersions and methods for making them are identified in United States Patent Number 6,875,800 B2. Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discreet "composite microparticles" that comprise a nanoparticle and a resin coating on the nanoparticle. Example dispersions of resin-coated nanoparticles and methods for making them are identified in United States Patent Application Serial Number 10/876,031 filed June 24, 2004, United States Patent Application Publication Number 2005-0287348 A1, filed June 24, 2004, and United States Patent Application Publication Number 2006-0251897 filed January 20, 2006.

Example special effect compositions that may be used include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions can provide other perceptible properties, such as opacity or texture. In a non-limiting embodiment, special effect compositions can produce a color shift, such that the color of the coating changes when the coating is viewed at different angles. Example color effect compositions are identified in United States Patent Number 6,894,086. Additional color effect compositions can include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

In certain non-limiting embodiments, a photosensitive composition and/or photochromic composition, which reversibly alters its color when exposed to one or more light sources, can be used in the coating of the present invention. Photochromic and/or photosensitive compositions can be activated by exposure to radiation of a specified wavelength. When the composition becomes excited, the molecular structure is changed and the altered structure exhibits a new color that is different from the original color of the composition. When the exposure to radiation is removed, the photochromic and/or photosensitive composition can return to a state of rest, in which the original color of the composition returns. In one non-limiting embodiment, the photochromic and/or photosensitive composition can be colorless in a non-excited state and exhibit a color in an excited state. Full color-change can appear within milliseconds to several minutes, such as from 20 seconds to 60 seconds. Example photochromic and/or photosensitive compositions include photochromic dyes.

In a non-limiting embodiment, the photosensitive composition and/or photochromic composition can be associated with and/or at least partially bound to, such as by covalent bonding, a polymer and/or polymeric materials of a polymerizable component. In contrast to some coatings in which the photosensitive composition may migrate out of the coating and crystallize into the substrate, the photosensitive composition and/or photochromic composition associated with and/or at least partially bound to a polymer and/or polymerizable component in accordance with a non-limiting embodiment of the present invention, have minimal migration out of the coating. Example photosensitive compositions and/or photochromic compositions and methods for making them are identified in United States Patent Application Serial Number 10/892,919 filed July 16, 2004.

In general, the colorant can be present in any amount sufficient to impart the desired visual and/or color effect. The colorant may comprise from 1 to 65 weight percent of the present compositions, such as from 3 to 40 weight percent or 5 to 35 weight percent, with weight percent based on the total weight of the compositions.

Because the coating compositions of the present invention are liquid, they may also comprise a solvent and/or reactive diluent; alternatively, they may be 100% solids. Suitable solvents include water, organic solvent(s) and/or mixtures thereof. Suitable organic solvents include glycols, glycol ether alcohols, alcohols, ketones, and aromatics, such as xylene and toluene, acetates, mineral spirits, naphthas and/or mixtures thereof. "Acetates" include the glycol ether acetates. The solvents can be biomass derived. Examples of biomass derived solvents include esters of lactic acid and esters of soybean oil fatty acid. In certain embodiments, the solvent is a non-aqueous solvent. "Non-aqueous solvent" and like terms means that less than 50 percent of the solvent is water. For example, less than 10 percent, or even less than 5 percent of the solvent can be water. It will be understood that mixtures of solvents, including or excluding water in an amount of less than 50 percent, can constitute a "non-aqueous solvent". In other embodiments, the coating is aqueous or water-based. This means that 50% or more of the solvent is water. These embodiments have less than 50%, such as less than 20%, less than 10%, less than 5% or less than 2% solvent. In some embodiments, some or all of the solvent may be a reactive diluent that will co-cure with the other components in the formula. The reactive diluent can be biomass derived.

The compositions of the present invention may also further comprise a photoinitiator, such as one standardly used in the art to catalyze or accelerate cure if such cure is by exposure to ultraviolet radiation. Any suitable photoinitiator can be used, including any of the known photoinitiators such as benzophenone, benzoin, acetophenone, benzoin methyl ether, Michler's ketone, benzoin butyl ether, xanthone, thioxanthone, propiophenone, fluorenone, carbazole, diethoxyacetophenone, the 2-, 3- and 4-methylacetophenones and methoxy-acetophenones, the 2- and 3-chloroxanthones and chlorothioxanthones, 2-acetyl-4-methylphenyl acetate, 2,2'-dimethoxy-2-phenylacetophenone, benzaldehyde, fluorene, anthraquinone, triphenylamine, 3- and 4-allylacetophenone, p-diacetylbenzene, 3-chloro-2-nonylxanthone, 2-chlorobenzophenone, 4-methoxybenzophenone, 2,2,4,4-tetrachlorobenzophenone, 2-chloro-4'-methylbenzophenone, 4-chloro-4'-methylbenzophenone, 3-methylbenzophenone, 4-tert.butylbenzophenone, isobutyl ether-benzoic acetate, benzil benzilic acid, amino benzoate, methyl blue, 2,2-diethoxyacetophenone, 9,10-phenanthrenequinone, 2-methyl anthraquinone, 2-ethyl anthraquinone, 1-tert.butylanthraquinone, 1,4-naphthaquinone, isopropylthioxanthone, 2-isopropylthioxanthone, 2-methylthioxanthone, 2-decylthioxanthone, 2-dodecylthioxanthone, 2-methyl-1, [4-(methyl thio)phenyl]-2-morpholinopropanone-1, combinations thereof and the like.

The present coatings can be applied to any substrates known in the art, for example automotive substrates and industrial substrates. These substrates can be, for example, metallic or non-metallic, including polymeric, plastic, polycarbonate, polycarbonate/acrylobutadiene styrene ("PC/ABS"), polyamide, wood, veneer, wood composite, particle board, medium density fiberboard, cement, stone, and the like. In a particularly suitable embodiment of the present invention, the substrate itself is biodegradable. Biodegradable substrates include, for example paper, wood and biodegradable plastics such as cellulose, poly(lactic acid), poly(3-hydroxybutyrate) and starch based plastics. In addition, the substrate can be one that has been recycled. The substrate can also be one that has already been treated in some manner to impart color or other visual effect. For example, a wood substrate that has been stained may then be coated according to the present invention, as can a substrate that has already had one or more other coating layers applied to it.

As used herein, the term "polyamide" in reference to a substrate means a substrate constructed from a polymer that includes repeating units of the formula: 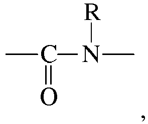 wherein R is hydrogen or an alkyl group. The polyamide may be any of a large class of polyamides based on aliphatic, cycloaliphatic, or aromatic groups in the chain. They may be formally represented by the products of condensation of a dibasic amine with a diacid and/or diacid chloride, by the product of self-condensation of an amino acid, such as omega-aminoundecanoic acid, or by the product of a ring-opening reaction of a cyclic lactam, such as caprolactam, lauryllactam, or pyrrolidone. They may contain one or more alkylene, arylene, or aralkylene repeating units. The polyamide may be crystalline or amorphous. In certain embodiments, the polyamide substrate comprises a crystalline polyamide of alkylene repeating units having from 4 to 12 carbon atoms, such as poly(caprolactam) (nylon 6), poly(lauryllactam) (nylon 12), poly(omega-aminoundecanoic acid) (nylon 11), poly(hexamethylene adipamide) (nylon 6.6), poly(hexamethylene sebacamide) (nylon 6.10), and/or an alkylene/arylene copolyamide, such as that made from meta-xylylene diamine and adipic acid (nylon MXD6). The term "nylon" includes all of these products as well as any other compound referred to in the art as nylon. Amorphous polyamides, such as those derived from isophoronediamine or trimethylcyclohexanediamine, may also be utilized. Blends of polyamides may also be utilized.

As used herein, the term "polyamide", when used in reference to a substrate, includes a reinforced polyamide substrate; a reinforced polyamide substrate is a polyamide substrate constructed from a polyamide that has been reinforced through the inclusion of, for example, fibrous materials, such as glass fiber or carbon fiber, or inorganic fillers, such as calcium carbonate, to produce a polyamide having increased rigidity, strength, and/or heat resistance relative to a similar polyamide that does not include such reinforcing materials. Reinforced polyamides that are suitable for use as a substrate material in accordance with certain embodiments of the present invention are commercially available and include, for example, those materials commercially available from Solvay Advanced Polymers under the IXEF name and, include, for example, the IXEF 1000, 1500, 1600, 2000, 2500, 3000 and 5000 series products; from EMS-Chemie Inc., Sumter, South Carolina, under the GRILAMID, GRIVORY, GRILON and GRILFLEX tradenames; and DuPont Engineered Polymers, such as those sold under the THERMX and MINLON tradenames.

The coatings of the present invention can be applied by any means standard in the art, such as electrocoating, spraying, electrostatic spraying, dipping, rolling, brushing, and the like.

The coatings can be applied to any dry film thickness, such as 2.54 to 50.8 µm (0.1 to 2.0 mils), 5.08 to 20.32 µm (0.2 to 0.8 mils) or 7.62 to 15.24 µm (0.3 to 0.6 mils). The coatings of the present invention can be used alone, or, as noted above, in combination with other stains and/or coatings. For example, the coating can comprise a colorant or not and can be used as a primer, basecoat, top coat, automotive repair coat and the like. For substrates coated with multiple coatings, one or more of those coatings can be coatings as described herein. In certain embodiments, the coating of the present invention will be a clearcoat applied on top of one or more other coatings.

The radiation curable coatings of the present invention can be cured upon exposure to high energy or actinic radiation. A class of high energy bombardment includes energetic electrons such as those derived from isotopes such as strontium-90, or intense electron beams produced by particle accelerators. Electron beam curing is most useful in applications where very rapid and economical rates are desired. In some systems, curing periods of less than about one second may be used, which is a total radiation dose of less than about 0.25 megarads.

A class of actinic radiation useful according to the present invention is ultraviolet light; also suitable are other forms of actinic radiation that are normally found in radiation emitted from the sun or from artificial sources such as Type RS Sunlamps, carbon arc lamps, xenon arc lamps, mercury vapor lamps, tungsten halide lamps, and the like. Ultraviolet radiation may be used most efficiently if the coating comprises a photocuring rate accelerator. Curing periods of from 1 second to 15 minutes are typical.

As used herein, unless otherwise expressly specified, all numbers such as those expressing values, ranges, amounts or percentages may be read as if prefaced by the word "about", even if the term does not expressly appear. Also, any numerical range recited herein is intended to include all sub-ranges subsumed therein. Singular encompasses plural and vice versa. For example, although reference is made herein, including the claims, to "a" polyol, "a" polycarboxylic acid/anhydride, "a" polyol/polycarboxylic reaction product, "a" hydroxyl-carboxylic acid, "a" crosslinker, "a" compound having "a" radiation curable moiety, and the like, one or more of each of these and any other components can be used. "Including" means "including, but not limited to". As used herein, the term "polymer" refers to oligomers and both homopolymers and copolymers, and the prefix "poly" refers to two or more.

### EXAMPLES

The following examples are intended to illustrate the invention, and should not be construed as limiting the invention in any way.

### EXAMPLE 1

Polyesters - 1-4 were made as follows:

**Table 1**

| Ingredients | | Parts by weight | | | |
|---|---|---|---|---|---|
| | Charge #1 | 1 | 2 | 3* | 4* |
| 1,3-Propanediol¹ | | 29.79 | 38.20 | 43.64 | 38.77 |
| Glycerol² | | 18.69 | 9.49 | -- | -- |
| Xylene | | 5.11 | 5.32 | 6.22 | 5.07 |
| 12-hydroxy stearic acid³ | | -- | -- | -- | 9.65 |

| | Charge #2 | | | | |
|---|---|---|---|---|---|
| Itaconic acid⁴ | | 46.41 | 47.23 | 49.74 | 46.14 |
| IONOL | | 0.12 | 0.13 | 0.10 | 0.09 |
| Butlylstannoic acid | | 0.19 | 0.19 | 0.20 | 0.18 |
| Triphenylphosphite | | 0.03 | 0.10 | 0.10 | 0.09 |
| | | | | | |
| Acid value | | 2.3 | 2.3 | 1.49 | 3.2 |
| Hydroxyl value | 426 | 426 | 349 | 236.0 | 195.0 |

| | | | | | |
|---|---|---|---|---|---|
| * comparative example ¹Commercially available from DuPont-Tate&Lyle, Inc. ²Commercially available from Cargill, Inc. ³Cenwax-A brand commercially available from Arizona Chemicals. ⁴Commercially available from Cargill, Inc. | | | | | |

Charge #1 was added into a 5-liter, 4-necked flask equipped with a motor-driven steel stir blade, a nitrogen inlet, a thermocouple, heated by a mantle controlled by the thermocouple via a temperature feedback control device, and set up for azeotropic distillation with a Dean-Stark trap topped by a water-cooled condenser. A column packed with ceramic helixes was fitted between the flask and the Dean-Stark trap to provide additional control of the rate of azeotropic distillation.

Stirring and a nitrogen flow of 0.2 scft/min were started, and Charge #2 was added to produce a suspension. Heating was then started with the temperature set to 140°C. When the internal temperature reached 133 - 135°C, water and xylene began to collect in the Dean-Stark trap. The water collecting at the bottom of the trap was withdrawn at intervals of about 10 min, and the temperature setting was increased by 5-degree intervals when needed to maintain a steady reflux and to collect approximately 1 gram water per minute until a temperature of 180°C was reached. At this point, no more water collected in the trap and the acid value fell. The reaction was allowed to cool to 100°C, then xylene was evaporated under a vacuum of 1.7 10⁴ to 3.0 10⁴ Pa (5 to 9 inches of mercury).

### EXAMPLE 2

Urethane-acrylates - 1 -3 were made as follows:

**Table 2**

| Ingredients | | Parts by weight | | |
|---|---|---|---|---|
| | Charge #1 | 1 | 2 | 3 |
| Polyester | | 49.52 (polyester 1) | 55.95 (polyester 2) | 62.58 (polyester 3)* |

| | Charge #2 | | | |
|---|---|---|---|---|
| AOI⁵ | | 50.41 | 44 | 37.36 |
| IONOL | | 0.07 | 0.06 | 0.6 |
| | | | | |
| Acid value | | 1.3 | ND | ND |
| Hydroxyl value | | 18 | 22.4 | 9.9 |
| Unsaturation equivalent weight (g/eq) | | 199 | ND | ND |

| | | | | |
|---|---|---|---|---|
| * comparative example ⁵Acryloyl Oxyethyl Isocyanate - Versatile Monomer, commercially available from Showa Denko of Japan. ND = not determined | | | | |

Charge #1, consisting of the corresponding polyesters of Example 1, was added into a 2-liter, 4-necked flask equipped with a motor-driven steel stir blade, a water-cooled condenser, a thermocouple, a sparge tube that delivered a nitrogen-air mixed stream under the surface of the reaction mixture, and an oxygen probe to measure the oxygen content of the gas phase in the head space. Stirring and a nitrogen-air flow of 0.2 scft/min were started, and the nitrogen-air flows adjusted to a 5% vol/vol concentration of oxygen in the headspace.

When the oxygen concentration was stable at 5%, Charge #2 was added dropwise at such a rate as to keep the temperature below 80°C, such as at 50 to 70°C.

When Charge #2 was complete, the final reaction temperature of 70°C began to subside, indicating that AOI had reacted rapidly while it was added. After 15 minutes, the NCO content was monitored by IR. The band at 2267 cm^-1 was absent.

The product was poured into unlined metal cans.

### EXAMPLE 3,4,5

Radiation curable coating compositions of examples 3, 4, and 5 were prepared from the ingredients listed in Table 3. Charge V was then added to the flask followed by Charge I or Charge II under agitation. Then add Charge III and IV in order under agitation. The mixture was stirred for appropriate time to form a clear solution. The resulting combination was filtered twice with a 0.45µm filter.

**Table 3**

| **Charge** | **Component** | **Formula Weight (g)** | | |
|---|---|---|---|---|
| | | **Example 3*** | **Example 4** | **Example 5** |
| I | Urethane-acrylate 3 from Example 2 | 28.41 | -- | -- |
| | Urethane-acrylate 2 from Example 2 | -- | 28.41 | -- |
| | Urethane-acrylate 1 from Example 2 | -- | -- | 284.10 |
| | | | | |
| II | DARACURE 1173⁶ | 1.38 | 1.38 | 13.77 |
| | IRGACURE 184⁷ | 1.02 | 1.02 | 1.46 |
| | GENOCURE MBF⁸ | 0.17 | 0.17 | 1.51 |
| | Benzophenone | 0 | 0 | 10.20 |
| | TINUVIN 123⁹ | 0 | 0 | 0.6 |
| | | | | |
| III | PM Acetate | 5.71 | 5.71 | 57.10 |
| | n-butyl acetate | 20.0 | 20.0 | 200 |
| | Isobutanol | 14.29 | 14.29 | 142.9 |
| | | | | |
| IV | MODAFLOW 2100¹⁰ | 0 | 0 | 1.20 |
| | TEGOrad 2100¹¹ | 0.60 | 0.60 | 6.0 |
| | | | | |
| V | NANOCRYL C150¹² | 28.41 | 28.41 | 284.10 |
| | | | | |

| | | | | |
|---|---|---|---|---|
| * comparative example ⁶ Photoinitiator commercially available from CIBA Specialty Chemicals. ⁷ Photoinitiator commercially available from CIBA Specialty Chemicals. ⁸ Photoinitiator commercially available from Rahn, Inc. ⁹ Hindered amine light stabilizer commercially available from CIBA Specialty Chemicals. ¹⁰ Flow modifier commercially available from Cytec Surface Specialties. ¹¹ Flow modifier commercially available from Tego Chemie, Essen, Germany. ¹² Silica organo sol commercially available from Hanse Chemie AG, Geesthacht that is a 50/50 weight percent dispersion of amorphous silica particles having an average primary particle size of about 20 nanometers in trimethylolpropane triacrylate. | | | | |

To coat samples with foregoing composition, MAKROLON transparent polycarbonate plaques (Bayer AG) were wiped with 2-propanol. The coating solution was spin applied onto un-primed plaques and cured with H bulb with UVA dosage of 1 J/cm² and intensity of 0.6 W/cm² under air. Samples with final dry film thickness ranging from 10-20 µm were prepared. Coated samples were evaluated for adhesion, optical clarity and Taber abrasion resistance.

As demonstrated in Table 4, polycarbonate samples coated with coatings of the present invention were highly transparent with low initial haze with different levels of bio-content. Especially for example 5, better abrasion resistance was achieved with over 20% bio-content. These bio-based coatings also provided good adhesion and abrasion resistance.

**Table 4**

| Testing | Results | | |
|---|---|---|---|
| | Example 3* | Example 4 | Example 5 |
| Bio Content¹³ | 29.63 | 26.49 | 23.15 |
| Film Thickness (µm) | 12.5∼13.0 | 12.5∼13.0 | 12.5 |
| Adhesion¹⁴ | 5 | 5 | 5 |
| Initial Haze%¹⁵ | 2.11 | 0.288 | 0.41 |
| Haze% after 100 cycles of Taber Abrasion¹⁶ | 11.39 | 8.18 | 7.10 |
| Haze% after 300 cycles of Taber Abrasion | 20.39 | 16.28 | 8.93 |

| | | | |
|---|---|---|---|
| * comparative example ¹³ Bio-content: the percent of weight of bio-material over total coating weigh in the dry film. ¹⁴ Adhesion: Crosshatch, Nichiban LP-24 adhesive tape. Rating scale 0-5 (no adhesion - 100% adhesion after tape pull). ¹⁵ Haze% was measured with Hunter Lab spectrophotometer. ¹⁶ Taber Abrasion: Taber 5150 Abrader, CS-10 wheels, S-11 refacing disk, 500 grams of weight. Haze% was measured after 300 Taber cycles. Haze% <25% after 300 Taber cycles is acceptable. | | | |

### EXAMPLE 6,7,8

Standard bio-based coating compositions of examples 6, 7, and 8 were prepared from the ingredients listed in Table 5. Charge I was added to a suitable flask and stirred. Charge II was then added to the flask followed by Charge III and IV under agitation. The mixture was stirred for appropriate time to form a clear solution.

**Table 5**

| **Charge** | **Component** | **Formula Weight (g)** | | |
|---|---|---|---|---|
| | | **Example 6*** | **Example 7** | **Example 8** |
| I | Resin from Sample 2 (No glycerol) | 126.21 | -- | -- |
| | Resin from Sample 4 (10% Glycerol) | -- | 80.8 | -- |
| | Resin from Sample 6 (20% glycerol) | -- | -- | 80.8 |
| | SATOMER SR399¹⁷ | 32.12 | 19.40 | 19.40 |
| | SATOMER SR454¹⁸ | 40.15 | 15.40 | 15.40 |
| | | | | |
| II | DARACURE 1173 | 3.21 | 1.60 | 1.60 |
| | IRGACURE 184 | 3.21 | 1.60 | 1.60 |
| | GENOCURE MBF | 0 | 0 | 0 |
| | Benzophenone | 0 | 0 | 0 |
| | | | | |
| III | PM Acetate | 22.93 | 11.42 | 11.42 |
| | n-butyl acetate | 82.31 | 40.00 | 40.00 |
| | Isobutanol | 57.37 | 28.58 | 28.58 |
| | | | | |
| IV | DG57¹⁹ | 2.01 | 1.20 | 1.20 |

| | | | | |
|---|---|---|---|---|
| * comparative example ¹⁷ Dipentaerythritol pentaacrylate commercially available from Sartomer Company, Inc., Exton, PA. ¹⁸ Ethoxylated trimethylolpropane triacrylate commercially available from Sartomer Company, Inc., Exton, PA. ¹⁹ Flow modifier commercially available from Dow Corning. | | | | |

To coat samples with foregoing composition, MAKROLON transparent polycarbonate plaques (Bayer AG) were wiped with 2-propanol. The coating solution was spin applied onto un-primed plaques and cured with H bulb with UVA dosage of 1 J/cm² and intensity of 0.6 W/cm² under air. Samples with final dry film thickness ranging from 15-18µm were prepared. Coated samples were evaluated for adhesion, optical clarity and Taber abrasion resistance.

As demonstrated in Table 6, polycarbonate samples coated with these bio-based UV clear coats. These coatings with different level of bio-content in this invention were highly transparent with low initial haze with good adhesion and abrasion resistance.

**Table 6**

| Testing | Results | | |
|---|---|---|---|
| | Example 6* | Example 7 | Example 8 |
| Bio Content | 42.14 | 37.67 | 32.98 |
| Film Thickness (µm) | 17.5-20.0 | 15∼17.5 | 15 |
| Adhesion | 5 | 5 | 5 |
| Initial Haze | 0.26 | 0.12 | 0.24 |
| Haze% after 100 cycles of Taber Abrasion | 13.42 | 10.37 | 10.34 |
| Haze% after 300 cycles of Taber Abrasion | 31.46 | 22.2 | 24.33 |

| | | | |
|---|---|---|---|
| * comparative example | | | |

## Claims

1. A radiation curable liquid coating composition comprising:
the reaction product of
a) a polyol; and
b) a polycarboxylic acid/anhydride,
wherein at least some of a) and/or b) are biomass derived,
wherein the polyol is not a condensation reaction product of an acid functional compound and a hydroxy functional compound and comprises 1,3-propanediol and glycerol,
wherein the reaction product comprises ethylenic unsaturation that is derived from a) and/or b), but if derived only from b, b has more than four carbons.

2. The coating composition of Claim 1, wherein the polycarboxylic acid/anhydride comprises itaconic acid/anhydride.

3. The coating composition of Claim 1 comprising the reaction product of propanediol and glycerol and itaconic acid.

4. The coating composition of Claim 1, wherein the reaction product is further reacted with a hydroxyl carboxylic acid.

5. The coating composition of Claim 3 or 4, wherein the reaction product further comprises 12-hydroxy stearic acid.

6. The coating composition of Claim 1, wherein the reaction product further comprises a compound having a radiation curable moiety.

7. The coating composition of Claim 6, wherein the polyol is reacted with the compound comprising the radiation curable moiety prior to reaction with the polycarboxylic acid/anhydride.

8. The coating composition of Claim 6 or 7, wherein the compound comprising the radiation curable moiety comprises isocyanate-acrylate, preferably acryloyl oxyethyl isocyanate.

9. The coating composition of Claim 1, further comprising abrasion resistant particles.

10. The coating composition of Claim 9, wherein the particles comprise nanoparticles.

11. The coating composition of Claim 10, wherein the nanoparticles comprise silica.

12. The coating composition of Claim 1, wherein the coating composition is a dual cure coating composition.

13. The coating composition of Claim 1, wherein the coating composition comprises 50 weight percent or greater biomass derived product.

14. A substrate coated at least in part with the coating composition of Claim 1.

15. The substrate of Claim 14, wherein the substrate is plastic or wood.

## Patentansprüche

1. Strahlenhärtbare flüssige Beschichtungszusammensetzung enthaltend:
das Reaktionsprodukt von
a) einem Polyol und
b) einer Polycarbonsäure/einem Polycarbonsäureanhydrid,
wobei wenigstens einige von a) und/oder b) sich von Biomasse ableiten,
wobei das Polyol kein Kondensationsreaktionsprodukt einer säurefunktionellen Verbindung und einer hydroxyfunktionellen Verbindung ist und 1,3-Propandiol und Glycerin enthält,
wobei das Reaktionsprodukt ethylenische Ungesättigtkeit aufweist, die sich von a) und/oder b) ableitet, wenn sie sich aber nur von b ableitet, b mehr als vier Kohlenstoffatome hat.

2. Beschichtungszusammensetzung nach Anspruch 1, wobei die Polycarbonsäure/das Polycarbonsäureanhydrid Itaconsäure/Itaconsäuranhydrid enthält.

3. Beschichtungszusammensetzung nach Anspruch 1, enthaltend das Reaktionsprodukt von Propandiol und Glycerin und Itaconsäure.

4. Beschichtungszusammensetzung nach Anspruch 1, wobei das Reaktionsprodukt weiter mit einer Hydroxycarbonsäure umgesetzt ist.

5. Beschichtungszusammensetzung nach Anspruch 3 und 4, wobei das Reaktionsprodukt weiterhin 12-Hydroxystearinsäure enthält.

6. Beschichtungszusammensetzung nach Anspruch 1, wobei das Reaktionsprodukt weiterhin eine Verbindung mit einer strahlenhärtbaren Einheit enthält.

7. Beschichtungszusammensetzung nach Anspruch 6, wobei das Polyol mit der Verbindung, die die strahlenhärtbare Einheit enthält, vor der Reaktion mit der Polycarbonsäure/dem Polycarbonsäureanhydrid umgesetzt wird.

8. Beschichtungszusammensetzung nach Anspruch 6 oder 7, wobei die Verbindung, die die strahlenhärtbare Einheit enthält, Isocyanatacrylat, vorzugsweise Acryloyloxyethylisocyanat enthält.

9. Beschichtungszusammensetzung nach Anspruch 1, die zusätzlich abriebresistente Teilchen enthält.

10. Beschichtungszusammensetzung nach Anspruch 9, wobei die Teilchen Nanoteilchen umfassen.

11. Beschichtungszusammensetzung nach Anspruch 10, wobei die Nanoteilchen Siliciumdioxid umfassen.

12. Beschichtungszusammensetzung nach Anspruch 1, wobei die Beschichtungszusammensetzung eine dualhärtende Beschichtungszusammensetzung ist.

13. Beschichtungszusammensetzung nach Anspruch 1, wobei die Beschichtungszusammensetzung 50 Gew.-% oder mehr von Biomasse abgeleitetem Produkt enthält.

14. Substrat beschichtet zumindest teilweise mit der Beschichtungszusammensetzung nach Anspruch 1.

15. Substrat nach Anspruch 14, wobei das Substrat Kunststoff oder Holz ist.

## Revendications

1. Composition de revêtement liquide durcissable sous l'action d'un rayonnement, qui comprend le produit de réaction
a) d'un polyol
b) et d'un acide/anhydride d'acide polycarboxylique,
et dans lequel
- au moins certains de ces constituants (a) et/ou (b) sont dérivés de biomasse,
- le polyol n'est pas un produit de réaction de condensation d'un composé à fonction acide et d'un composé à groupe fonctionnel hydroxyle, et comprend du propane-1,3-diol et du glycérol,
- et le produit de réaction comporte une ou des insaturation(s) éthylénique(s) provenant des constituants (a) et/ou (b), étant entendu que si elle(s) ne dérive(nt) que de (b), ce constituant (b) comporte plus de quatre atomes de carbone.

2. Composition de revêtement conforme à la revendication 1, dans lequel l'acide/anhydride d'acide polycarboxylique comprend de l'acide/anhydride d'acide itaconique.

3. Composition de revêtement conforme à la revendication 1, qui comprend un produit de réaction de propanediol et glycérol et d'acide itaconique.

4. Composition de revêtement conforme à la revendication 1, pour laquelle on a en outre fait réagir le produit de réaction avec un acide hydroxycarboxylique.

5. Composition de revêtement conforme à la revendication 3 ou 4, dans laquelle le produit de réaction comprend en outre de l'acide 12-hydroxystéarique.

6. Composition de revêtement conforme à la revendication 1, dans laquelle le produit de réaction comprend en outre un composé comportant un fragment qui peut, sous l'action d'un rayonnement, donner lieu à un durcissement.

7. Composition de revêtement conforme à la revendication 6, pour laquelle, avant de faire réagir le polyol avec l'acide/anhydride d'acide polycarboxylique, on le fait réagir avec le composé comportant un fragment qui peut, sous l'action d'un rayonnement, donner lieu à un durcissement.

8. Composition de revêtement conforme à la revendication 6 ou 7, pour laquelle le composé comportant un fragment qui peut, sous l'action d'un rayonnement, donner lieu à un durcissement comprend un isocyanate-acrylate, de préférence de l'isocyanate d'acryloyloxy-éthyle.

9. Composition de revêtement conforme à la revendication 1, qui comprend en outre des particules résistantes à l'abrasion.

10. Composition de revêtement conforme à la revendication 9, dans laquelle les particules comprennent des nanoparticules.

11. Composition de revêtement conforme à la revendication 10, dans laquelle les nanoparticules comprennent de la silice.

12. Composition de revêtement conforme à la revendication 1, laquelle composition de revêtement est une composition de revêtement à double mode de durcissement.

13. Composition de revêtement conforme à la revendication 1, laquelle composition de revêtement comprend 50 % en poids ou plus de produit dérivé de biomasse.

14. Substrat revêtu, au moins en partie, avec une composition de revêtement conforme à la revendication 1.

15. Substrat conforme à la revendication 14, lequel substrat est du plastique ou du bois.
